# EUROPEAN PATENT SPECIFICATION

(11) **EP 1 004 089 B1**
(45) Date of publication and mention of the grant of the patent: **24.10.2007**
(21) Application number: 97948508.3
(22) Date of filing: 21.11.1997
(51) Int. Cl.: G07D 7/20, G07D 11/00, G07F 19/00

(54) **AN AUTOMATED DOCUMENT PROCESSING SYSTEM USING FULL IMAGE SCANNING**
AUTOMATISCHES DOKUMENTENVERARBEITUNGSSYSTEM MIT VOLLBILDABTASTUNG
SYSTEME DE TRAITEMENT AUTOMATISE DE DOCUMENTS PAR NUMERISATION DE L'IMAGE ENTIERE

(30) Priority: 27.11.1996 US 31604 P
(43) Date of publication of application: 31.05.2000
(73) Proprietor: CUMMINS-ALLISON CORPORATION, Mount Prospect, IL 60056 (US)
(72) Inventor: JONES, John, E., Winnetka, IL 60043 (US); MENNIE, Douglas, U., Barrington, IL 60010 (US); JONES, William, J., Barrington, IL 60010 (US)
(74) Representative: Grünecker, Kinkeldey, Stockmair & Schwanhäusser Anwaltssozietät
(86) International application number: PCT/US1997/021548
(87) International publication number: WO 1998/024052

(56) References cited:
- WO-A-96/10800
- US-A- 3 976 198
- US-A- 4 264 808
- US-A- 4 442 541
- US-A- 4 563 771
- US-A- 4 823 393
- US-A- 5 076 441
- US-A- 5 199 543
- US-A- 5 488 671
- US-A- 5 615 280

## Description

### FIELD OF INVENTION

The present invention relates to document and currency processing systems such as automatic teller machines and currency redemption machines.

### SUMMARY OF THE INVENTION

The primary object of the invention is to provide a document and currency processing system capable of processing mixed currency or documents utilizing full image scanning and a currency discriminator.

It is yet another object of the invention to provide a system where deposits are processed substantially immediately.

It is a further object of the invention to provide a document processing system whereby the full image of the scanned document can be communicated to a central office.

It is yet another object of the invention to provide a currency and document processing system which provides all the benefits of an automated teller machine.

Other aspects and advantages of the present invention will become apparent upon reading the following detailed description and in reference to the drawings.

In accordance with the present invention, the foregoing objectives are realized by providing a document processing system comprising an input receptacle for receiving documents; a transport mechanism receiving said documents from said input receptacle and transporting said documents past a full image scanner and a discrimination unit; an output receptacle for receiving said documents from said transport mechanism after being transported past said full image scanner and discrimination unit; said full image scanner including means for obtaining a full video image of said documents, means for obtaining a image of a selected area of said documents, and means for obtaining information contained in said selected area of said document; said discrimination unit including means for determining the authenticity of said document; and a system controller for directing the flows of documents on said transport mechanism.

### BRIEF DESCRIPTION OF THE DRAWINGS

FIG. 1a shows a block diagram of the components of a document and currency processing system according to principles of the present invention;
FIG. 1b is a perspective view of one embodiment of the processing system according to principles of the present invention;
FIG. 2 shows a flowchart describing the operation of the document and currency processing system according to principles of the present invention;
FIG. 3 is a block diagram of the full image scanner according to principles of the present invention;
FIG. 4 is block diagram showing the discriminator according to principles of the present invention;
FIGs. 5-7 illustrate the document scanning process used by the discriminator according to principles of the present invention;
FIG. 8a is a flowchart of the bill sorting algorithm unit according to principles of the present invention;
FIGs. 8b, 8c, and 8d are flowcharts of the funds distribution algorithm according to principles of the present invention; and
FIG. 8e is a flowchart of an alternate funds distribution algorithm according to principles of the present invention.

### DETAILED DESCRIPTION OF THE PREFERRED EMBODIMENT

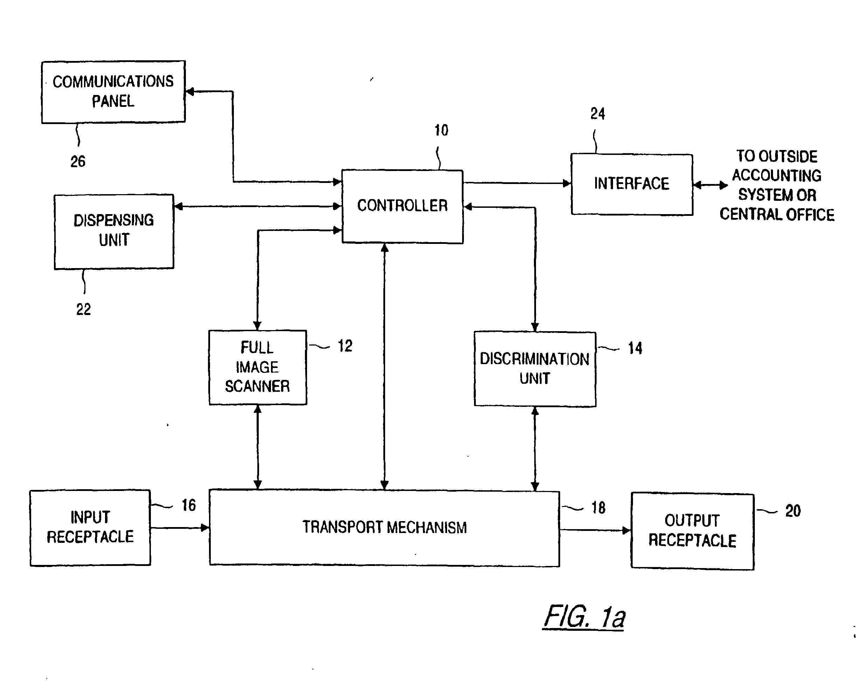

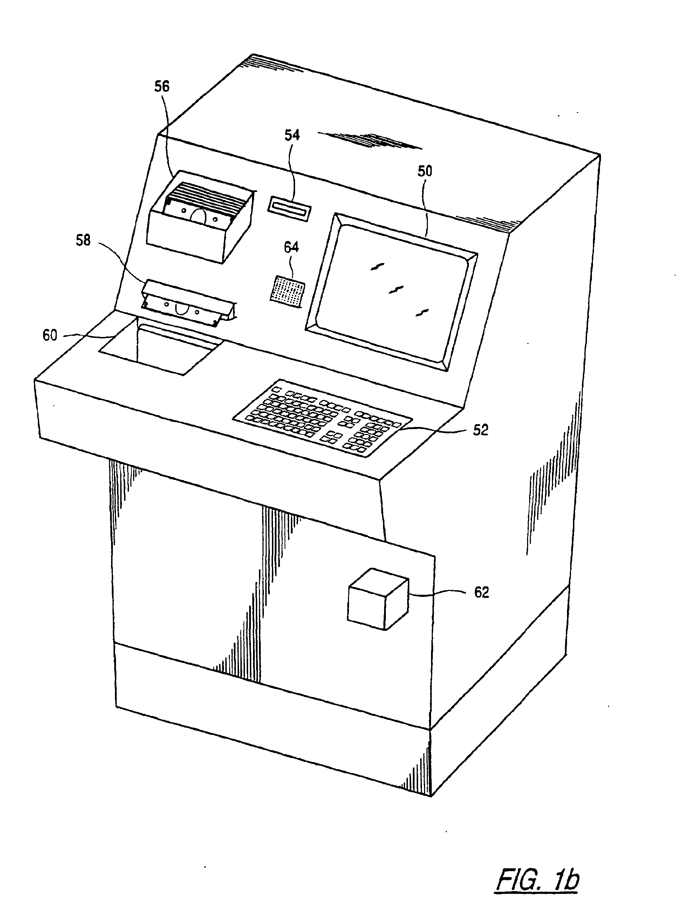

As illustrated in FIGs. 1a and 1b, a user deposits currency or documents into an input receptacle 16. By "currency" or "documents", it is meant to include not only conventional U.S. or foreign bills, such as $1 bills, but checks, deposit slips, coupon and loan payment documents, food stamps, cash tickets, savings withdrawal tickets, check deposit slips, savings deposit slips, and all other documents utilized as a proof of deposit at financial institutions. A transport mechanism 18 transports the currency from the input receptacle 16 past an full image scanner 12, as the currency is illuminated by a light (not shown). The full image scanner 12, described in greater detail below, preferably scans the full image of the currency, recognizes certain fields within the currency, and processes information contained within these fields in the currency. For example, the full image scanner 12 may search for the serial number field when processing U.S. currency, determine the serial number once the field is located, and store the serial number for later use by the system.

Next, the transport mechanism 18 transports the bill past a discrimination unit 14 which is also described in greater detail below. The discrimination unit 14 authenticates and, in the case of a bill, determines the denomination of the bill. The discrimination unit 14 also directs the transport unit 18 to place the currency in the output receptacle 16 as described below.

A dispensing unit 22 dispenses funds to a user. For example, when the user is depositing currency in an account, the system has the capability to return all or part of a deposit back to the user in the form of bills, coins, or other media via the dispensing unit 22. The amount of payback to the user may be supplemented by funds from other accounts, as well, as described below.

A controller 10 manages the operation of the system. The controller 10 directs the flow of currency from the input receptacle 16 through the transport mechanism 18, past the full image scanner 12 and the discrimination unit 14, and into the output receptacle 20. The controller 10 also directs the dispensing unit 22 to dispense funds to the user and routes information from the full image scanner 12 and the discrimination unit 14 to an interface 24 which communicates with an outside accounting system or central office. The controller is also capable of directing information from the outside office through the interface and to a communications panel 26. Finally, the controller 10 selectively processes information from the full image scanner 12 and the discrimination unit 14 for use by the system.

The system, via the link with the outside accounting system or central office, processes transactions substantially immediately. That is, deposits are processed in real time rather than waiting for the end of the day. Also, full images of all documents can be stored on mass storage devices at the central office.

The communication panel 26 displays information to the user and accepts user commands. The panel 26 consists of a video screen 50 onto which information to the user is displayed by the system and a keyboard 52 for accepting commands from a user. Alternatively, the communications panel 26 can consist of a touch screen or a combination of a touch screen and keyboard. A slot 54 is used for receiving a user's identification card. The user inserts a card into the slot 54 to access the machine. The user deposits currency into bin 56. Loose currency is dispensed from slot 58, strapped currency from receptacle 60, and loose coin at receptacle 62. An audio microphone and speaker 64 allow two-way communication between the user and a central office, for example, with a teller at a bank's central office. Thus, during the operating hours of a financial institution, bank personnel are connected to the system by the audio microphone and speaker 64. The central office also receives full video images of the currency or documents from the system. If the currency is not recognizable, the image is forwarded to the bank employee for observation on a terminal. The bank employee could then discuss the document with the customer. In this case, the bank employee could decide to accept the note immediately for credit after reviewing the image on the terminal. Alternatively, the teller may be able to enter missing data via their keyboard at the central office, if the image is recognizable. Finally, if the teller is near the machine and an image is unclear, the teller may remove the currency from the scanner, inspect the note, and enter the missing data.

The output receptacle 20 can be a single bin into which all currency transported by the transport mechanism 18 is stored. Alternatively, the output receptacle 20 can consist of dual bins. In the case of dual bins, identifiable currency is placed into the first bin and unidentifiable currency is placed into the second bin. Additionally, any number of output bins can be used to store the currency. For example, currency of particular denominations can be stored in separate bins. For example, one bin each can be used to store $1, $5, $10, $20, $50, and $100 bills.

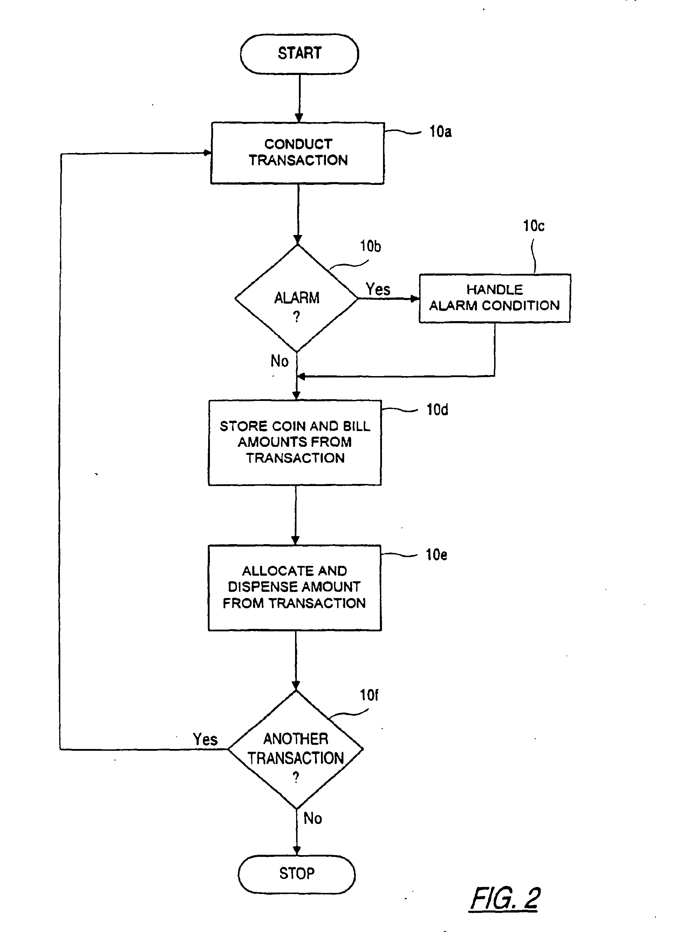

The general operation of the funds processing system is illustrated in FIG. 2. The user conducts a transaction at step 10a. During the transaction step 10a, the user places currency into the input receptacle 16, the full image scanner 12 scans a full image of the currency, selected parts of the image are processed by the image scanner 12, the discrimination unit 14 authenticates the currency, and the currency is placed in the output receptacle 20. During the transaction step 10a, any interaction with personnel at a central office, for example, with a bank teller, occurs.

An alarm condition may be generated during a transaction. At step 10b, the system determines whether an alarm condition is present. If the answer is affirmative, then at step 10c the system responds to the alarm condition. The response may be automatic or may require manual action by the user. If the response is automatic, the system preferably flashes a warning light, for example a 24 VAC external light driven by a relay. If the response required is manual, the user is required to perform some manual action and instructions of how to proceed may be displayed to the user on a user display screen, as described below. Alarm conditions occur when the user presses a help key; when a currency dispenser becomes empty; when more than a programmable predetermined amount of foreign currency is detected; upon a system error condition; and when a bin is full. If the answer to step 10b is negative or upon completion of step 10c, operation continues at step 10d.

After the alarm condition is tested or handled, the amount deposited in the transaction is stored at step 10d for later use. The values are preferably stored in a computer memory. Next, at step 10e, the user or machine distributes the deposited amount stored in step 10d. Step 10e is also described in greater detail below and can, for example, consist of receiving the deposited amount in the form of bills, allocating it to a savings account, or receiving part of the deposit back in bills and crediting the remainder to a bank savings account. At step 10f, the user is given the choice of conducting a new transaction. If the answer is affirmative, the system returns to step 10a which is described above. If the user answers in the negative, then the machine stops.

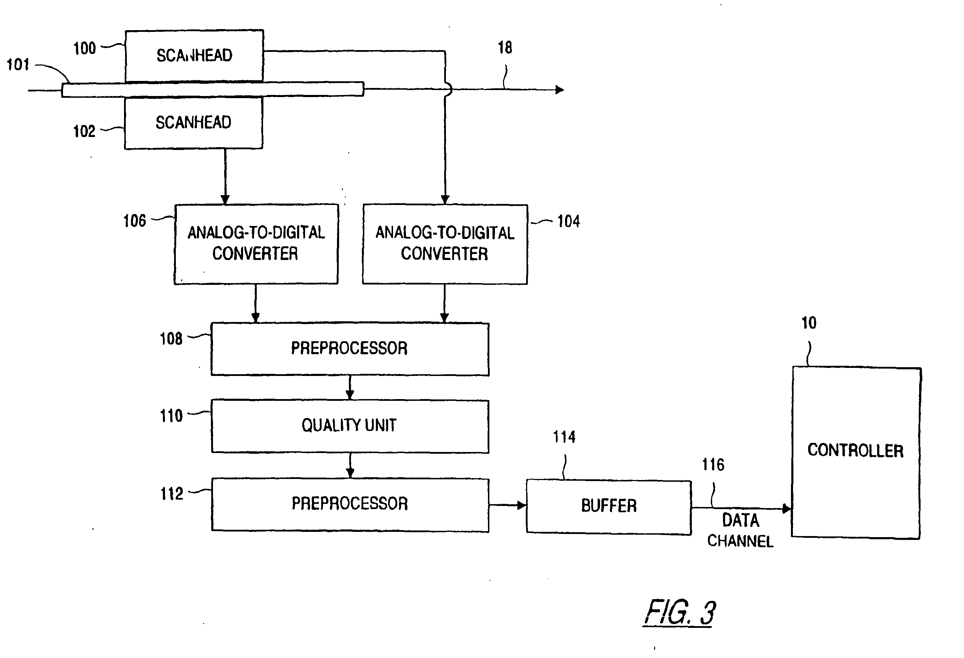

The full image scanner 12 is now described in detail. In accordance with the present invention, the image scanner may be of the type disclosed in U.S. Patent No. 4,888,812 which is herein incorporated by reference in its entirety. As shown in FIG. 3, the front and back surfaces of the documents are scanned by scan heads 100 and 102 and the images processed into video image data by electronic circuitry. The scan heads 100 and 102 are preferably charge coupled scanner arrays and generate a sequence of analog signals representing light and dark images defining the image on the document. The scan heads 100 and 102 are arranged for simultaneously scanning both the front and back of the documents and are connected respectively to analog-to-digital converters 104 and 106 which convert the analog values into discrete binary gray scale values of, for example, 256 gray scale levels. The scan heads are capable of obtaining images of varying resolutions. The particular resolution chosen, which can be varied by the user, is selected based upon the type of document being scanned, as is known in the art.

The high resolution gray scale image data from the analog-to-digital converters 104 and 106 is directed to an image data preprocessor 108 in which the data may be enhanced and smoothed and which serves to locate the edges of successive documents and discard irrelevant data between documents. If the documents are slightly skewed, the image preprocessor 108 can also perform rotation on the image data to facilitate subsequent processing.

The image data is monitored for unacceptable image quality by image quality unit 110. For example, the image quality unit 110 and monitors the distribution of gray scale values in the image data and create a histogram. As is well known in the art, acceptable quality images have a distribution of gray scale values within certain prescribed limits. If the gray scale distribution of the histogram falls outside these limits, this is indicative of poor image quality and an error condition is generated.

The image data is transmitted from the quality unit 110 to the image processor 112. As is known in the art, the optical scanners can additionally scan specified fields on the faces of the document. For example, when processing checks, the scan head may search for the "$" symbol as a coordinate to the left of the numeric check amount field box. As is known in the art, a straight coordinate system or dimension system is used where known dimensions of the box are used to locate the field. Also, when scanning currency, the system searches for the serial numbers printed at defined locations which the image processor 112 can locate. The processor 112 can be programmed to locate fields for various types of currency and perform processing as follows. Based on scanning certain areas on the currency or document, the processor 112 first identifies the type of currency, for example, U.S. bank notes. Then, based on the outcome of the previous step, certain fields of interest are located, and the information stored for use by the system. The processor 112 also compresses the image data, as is known in the art, in preparation for transmission to an outside location.

The amount of image data per document may vary depending upon the size and nature of the document and the efficiency of the data compression and reduction for that particular document. To insure that no data is lost in the event that the volume of image data may temporally exceed the transfer capacity of the high speed data channel, a prechannel buffer 114 interposed prior to the data channel, which is connected to the controller 10. The capacity of the pre-channel buffer 114 is continually monitored by the controller 10 so that appropriate action may be taken if the buffer becomes overloaded. The compressed video image data is received by the controller 10 over a high-speed data channel 116 and is initially routed to temporary storage. The image buffer is preferably of a size capable of storing the image data from at least several batches or runs of checks or similar documents. The controller 10 performs the functions of analyzing the data. The currency discrimination unit 14 now is described in greater detail.

Other scanning modules and methods can be used in place or in addition to the particular one described above such as those described in U.S. Patent No. 5,023, 782; U.S. Patent No. 5,237,158; U.S. Patent No. 5, 187,750; and U.S. Patent No. 4,205,780 all of which are incorporated by reference in their entirety.

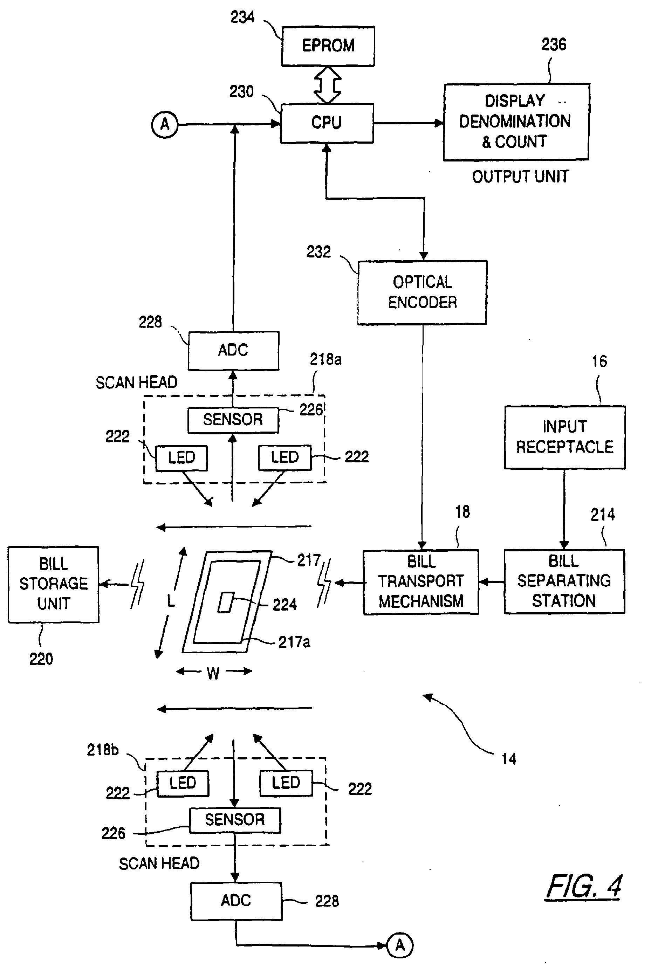

Referring now to FIG. 4, there is shown a preferred embodiment of the discrimination unit 14 according to the present invention. The unit is connected to the input receptacle 16 where stacks of currency or bills that need to be identified and counted are positioned. Bills in the input receptacle are acted upon by a bill separating station 214 which functions to pick out or separate one bill at-a-time for being sequentially relayed by a bill transport mechanism 18, according to a precisely predetermined transport path, between a pair of scan heads 218a, 218b where the currency denomination of the bill is scanned and identified. In the preferred embodiment depicted, each scan head 218a, 218b is an optical scan head that scans for characteristic information from the scanned currency 217 which is used to identify the denomination of the currency. The scanned currency 217 is then transported to an output receptacle or stacking station 220 where currency so processed is stacked for subsequent removal.

Each optical scan head 218a, 218b preferably comprises a pair of light sources 222 directing light onto the bill transport path so as to illuminate a substantially rectangular light strip 224 upon a currency bill 217 positioned on the transport path adjacent the scan head 218. Light reflected off the illuminated strip 224 is sensed by a photodetector 226 positioned between the two light sources. The analog output of the photodetector 226 is converted into a digital signal by means of an analog-to-digital (ADC) converter unit 228 whose output is fed as a digital input to a central processing unit (CPU) 230.

The transport path is defined in such a way that the transport mechanism 216 moves currency bills with the narrow dimension of the bills being parallel to the transport path and the scan direction. As a bill 217 traverses the scan heads 218a, 218b, the coherent light strip 224 effectively scans the bill across the narrow dimension of the bill. In the preferred embodiment depicted, the transport path is so arranged that a currency bill 217 is scanned across a central section of the bill along its narrow dimension, as shown in FIG. 4. Each scan head functions to detect light reflected from the bill as it moves across the illuminated light strip 224 and to provide an analog representation of the variation in reflected light, which, in turn, represents the variation in the dark and light content of the printed pattern or indicia on the surface of the bill. This variation in light reflected from the narrow dimension scanning of the bills serves as a measure for distinguishing, with a high degree of confidence, among a plurality of currency denominations which the system is programmed to handle.

A series of such detected reflectance signals are obtained across the narrow dimension of the bill, or across a selected segment thereof, and the resulting analog signals are digitized under control of the CPU 230 to yield a fixed number of digital reflectance data samples. The data samples are then subjected to a normalizing routine for processing the sampled data for improved correlation and for smoothing out variations due to "contrast" fluctuations in the printed pattern existing on the bill surface. The normalized reflectance data represents a characteristic pattern that is unique for a given bill denomination and provides sufficient distinguishing features among characteristic patterns for different currency denominations.

In order to ensure strict correspondence between reflectance samples obtained by narrow dimension scanning of successive bills, the reflectance sampling process is preferably controlled through the CPU 230 by means of an optical encoder 232 which is linked to the bill transport mechanism 216 and precisely tracks the physical movement of the bill 217 between the scan heads 218a, 218b. More specifically, the optical encoder 232 is linked to the rotary motion of the drive motor which generates the movement imparted to the bill along the transport path. In addition, the mechanics of the feed mechanism ensure that positive contact is maintained between the bill and the transport path, particularly when the bill is being scanned by the scan heads. Under these conditions, the optical encoder 232 is capable of precisely tracking the movement of the bill 217 relative to the light strips 224 generated by the scan heads 218a, 218b by monitoring the rotary motion of the drive motor.

The outputs of the photodetectors 226 are monitored by the CPU 230 to initially detect the presence of the bill adjacent the scan heads and, subsequently, to detect the starting point of the printed pattern on the bill, as represented by the thin borderline 217a which typically encloses the printed indicia on currency bills. Once the borderline 217a has been detected, the optical encoder 232 is used to control the timing and number of reflectance samples that are obtained from the outputs of the photodetectors 226 as the bill 217 moves across the scan heads.

The use of the optical encoder 232 for controlling the sampling process relative to the physical movement of a bill 217 across the scan heads 218a, 218b is also advantageous in that the encoder 232 can be used to provide a predetermined delay following detection of the borderline 217a prior to initiation of samples. The encoder delay can be adjusted in such a way that the bill 217 is scanned only across those segments which contain the most distinguishable printed indicia relative to the different currency denominations.

In the case of U.S. currency, for instance, it has been determined that the central, approximately two-inch (approximately 5 cm) portion of currency bills, as scanned across the central section of the narrow dimension of the bill, provides sufficient data for distinguishing among the various U.S. currency denominations. Accordingly, the optical encoder can be used to control the scanning process so that reflectance samples are taken for a set period of time and only after a certain period of time has elapsed after the borderline 217a is detected, thereby restricting the scanning to the desired central portion of the narrow dimension of the bill.

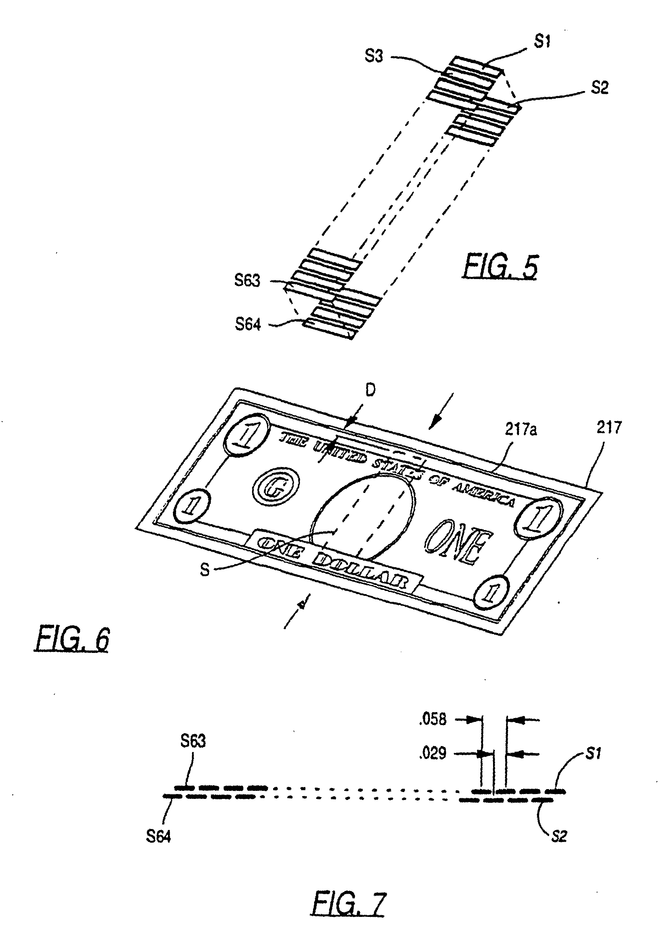

FIGs. 5-7 illustrate the scanning process in more detail. Referring to FIG. 6, as a bill 217 is advanced in a direction parallel to the narrow edges of the bill, scanning via a slit in the scan head 218a or 218b is effected along a segment S of the central portion of the bill 217. This segment S begins a fixed distance *D* inboard of the borderline 217a. As the bill 217 traverses the scan head, a strip *s* of the segment S is always illuminated, and the photodetector 226 produces a continuous output signal which is proportional to the intensity of the light reflected from the illuminated strip *s* at any given instant. This output is sampled at intervals controlled by the encoder, so that the sampling intervals are precisely synchronized with the movement of the bill across the scan head.

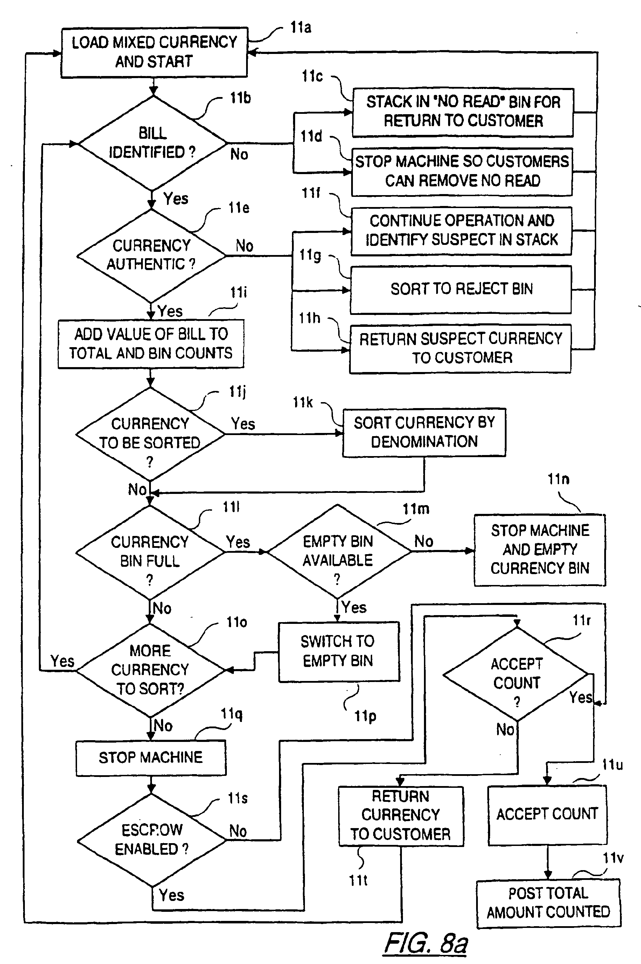

As illustrated in FIGs. 5 and 7, it is preferred that the sampling intervals be selected so that the strips *s* that are illuminated for successive samples overlap one another. The odd-numbered and even-numbered sample strips have been separated in FIGs. 5 and 7 to more clearly illustrate this overlap. For example, the first and second strips *s*1 and *s*2 overlap each other, the second and third strips *s*2 and *s*3 overlap each other, and so on. Each adjacent pair of strips overlap each other. In the illustrative example, this is accomplished by sampling strips that are 0.050 inch (0.127 cm) wide at 0.029 inch (0.074 cm) intervals, along a segment S that is 1.83 inch (4.65 cm) long (64 samples).

The optical sensing and correlation technique is based upon using the above process to generate a series of stored intensity signal patterns using genuine bills for each denomination of currency that is to be detected. According to a preferred embodiment, two or four sets of master intensity signal samples are generated and stored within the system memory, preferably in the form of an EPROM 234 (see FIG. 5), for each detectable currency denomination. In the case of U.S. currency, the sets of master intensity signal samples for each bill are generated from optical scans, performed on the green surface of the bill and taken along both the "forward" and "reverse" directions relative to the pattern printed on the bill. Alternatively, the optical scanning may be performed on the black side of U.S. currency bills or on either surface of foreign bills. Additionally, the optical scanning may be performed on both sides of a bill. In adapting this technique to U.S. currency, for example, sets of stored intensity signal samples are generated and stored for seven different denominations of U.S. currency, i.e., $1, $2, $5, $10, $20, $50 and $100. For bills which produce significant pattern changes when shifted slightly to the left or right, such as the $10 bill in U.S. currency, it is preferred to store two patterns for each of the "forward" and "reverse" directions, each pair of patterns for the same direction represent two scan areas that are slightly displaced from each other along the long dimension of the bill. Accordingly, a set of 16 different master characteristic patterns are stored within the EPROM for subsequent correlation purposes (four master patterns for the $10 bill and two master patterns for each of the other denominations). Once the master patterns have been stored, the pattern generated by scanning a bill under test is compared by the CPU 230 with each of the 216 master patterns of stored intensity signal samples to generate, for each comparison, a correlation number representing the extent of correlation, i.e., similarity between corresponding ones of the plurality of data samples, for the sets of data being compared.

The CPU 230 is programmed to identify the denomination of the scanned bill as corresponding to the set of stored intensity signal samples for which the correlation number resulting from pattern comparison is found to be the highest. In order to preclude the possibility of mischaracterizing the denomination of a scanned bill, as well as to reduce the possibility of spurious notes being identified as belonging to a valid denomination, a bi-level threshold of correlation is used as the basis for making a "positive" call. If a "positive" call can not be made for a scanned bill, an error signal is generated. Further details of the discrimination unit are contained in U.S. Patent No. 5,295,196 which is incorporated herein by reference in its entirety.

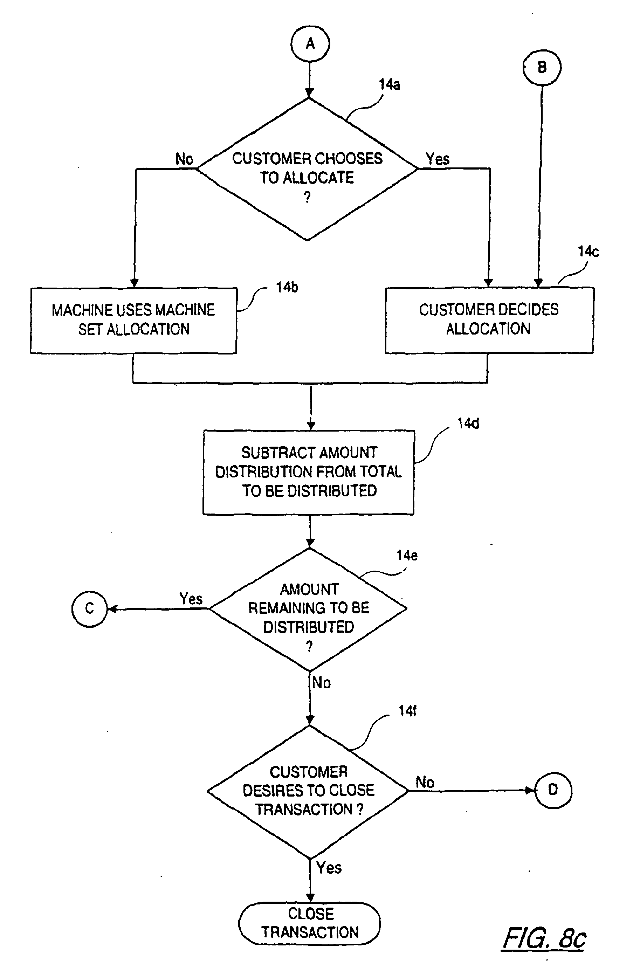

The operation of the currency discrimination unit is now described. The details of conducting a bill transaction are illustrated in FIG. 8a. The user loads mixed currency at step 11a into the machine. This can be accomplished, as discussed above, by placing the currency in receptacle 16 on the machine. Next, still at step 11a, the user initiates the processing of the currency. This can be accomplished, for example, by having the user press a start key on a touch screen on the communications panel 26, as discussed above, to initiate a transaction.

The machine attempts to identify the currency or document at step 11b. If step 11b fails to identify the currency, several alternatives are possible depending upon the exact implementation chosen for the machine. For example, as described previously, if it fails to identify the currency, the system can use two canisters and place an unidentified bill in a "no read" currency canister. Alternatively, at step 11d, the machine can be stopped so that the user can remove the "no read" currency immediately. In this alternative, if the currency can not be recognized by the machine, the unidentified currency is diverted, for example, to a return slot so that it can be removed from the machine by the user. After completing these steps, the system returns to step 11b to identify the other loaded currency.

In the event that the user wishes to deposit "no read" currency that are returned to the user, the user may key in the value and number of such currency and deposit them in an envelope for later verification. A message on the display screen may advise the user of this option. For example, if four $10 bills are returned, then re-deposited by the user in an envelope, the user may press a "$10" key four times. The user then receives immediate credit for all the bills denominated and authenticated by the scanner. Credit for re-deposited "no read" bills is given only after a bank picks up the envelope and manually verifies the amount. Alternatively, at least preferred users can be given full credit immediately, subject to later verification, or immediate credit can be given up to a certain dollar limit. In the case of counterfeit bills that are not returned to the user, the user can be notified of the detection of a counterfeit suspect at the machine or later by a written notice or personal call, depending upon the preferences of the financial institution.

If step 11b identifies the currency, next, at step 11e, the machine attempts to authenticate the currency to determine if the currency is genuine. The authentication process is described in greater detail below. If the currency is not genuine, then the system proceeds to one of three steps depending upon which option a user chooses for their machine. At step 11f, the system may continue operation and identify the suspect currency in the stack. In this alternative, a single canister is used for all currency, regardless of whether they are verified bills, no reads, or counterfeit suspects. On the other hand, at step 11g the machine may outsort the currency, for example, to a reject bin. The machine may also return the suspect currency at step 11h directly to the user. This is accomplished by diverting the currency to the return slot. Also, the machine maintains a count of the total number of counterfeit bills. If this total reaches a certain threshold value, an alarm condition will be generated. The alarm condition may be handled, for example, by turning on a light on the machine or by alerting the central office.

As mentioned above, the system may use a single canister to hold the currency. If a single canister system is used, then the various bills are identified within the single canister by placing different colored markers at the top of different bills. These bills are inserted into the bill transport path so they follow the respective bills to be inserted into the canister. Specifically, a first marker, e.g., a marker of a first color, is inserted to indicate the bill is a counterfeit suspect that is not to be returned to the user. A second type of marker, e.g., a marker of a second color, can be inserted to indicate that the bill is a counterfeit suspect. A third type of marker, e.g., of a third color, is inserted to indicate that a marked batch of bills represents a deposit whose verified amount did not agree with the user's declared balance. Because this third type of marker identifies a batch of bills instead of a single bill, it is necessary to insert a marker at both the beginning and end of a marked batch.

If the currency is authenticated, the total count Bₜₒₜₐₗ and bin count B_{counti} (where "i" is the "ith" bin) are incremented at step 11i. The total count Bₜₒₜₐₗ is used by the machine to establish the amount deposited by the user and the bin counts are used to determine the amount of bills in a particular bin.

The machine then determines whether sorting is required at step 11j. If the answer is affirmative, then the currency is sorted by denomination at step 11k. Rather than using single or double bins, as described above, this option includes a bin for each denomination. Sorting is accomplished by a sorting and counting module which sorts the bills placing each denomination in a specific bin. The sorting algorithm used can be any that is well known in the art.

After sorting at step 11k or if the answer to step 11j is negative, the machine proceeds to step 11l. At step 11l, the machine tests if the currency bin in use is full. That is, the machine compares B_{counti} to the maximum allowed for a bin. If it is full, at step 11m, the machine determines if there is an empty currency bin. If there is no empty currency bin available, at step 11m. the machine stops. The currency is emptied at step 11n. If an empty currency bin exists, the machine switches to the empty bin and places the bill into that bin at step 11p.

At step 11o, the system determines when the last bill in the deposited stack of bills has been counted. If counting is complete, the machine is stopped at step 11q.

The transport mechanism may also include an escrow holding area where the currency being processed in a pending deposit transaction is held until the transaction is complete. Thus, from step 11q, the system proceeds to step 11s, to determine if escrow has been enabled. If escrow has not been enabled, the count of the machine is accepted at step 11u and the total amount Bₜₒₜₐₗ is posted to the user at step 11v. If escrow has been enabled, at step 11r, the user is given the choice of accepting the count. If the user decides not to accept the count, at step 11t, the currency is returned to the user. From step 11t, the machine proceeds to step 11a where the user is given another chance of counting the currency. If the user decides to accept the count at step 11r, the machine proceeds to step 11u where the count is accepted and step 11v where the total count is displayed to the user. At this point, the bill counting transaction is complete.

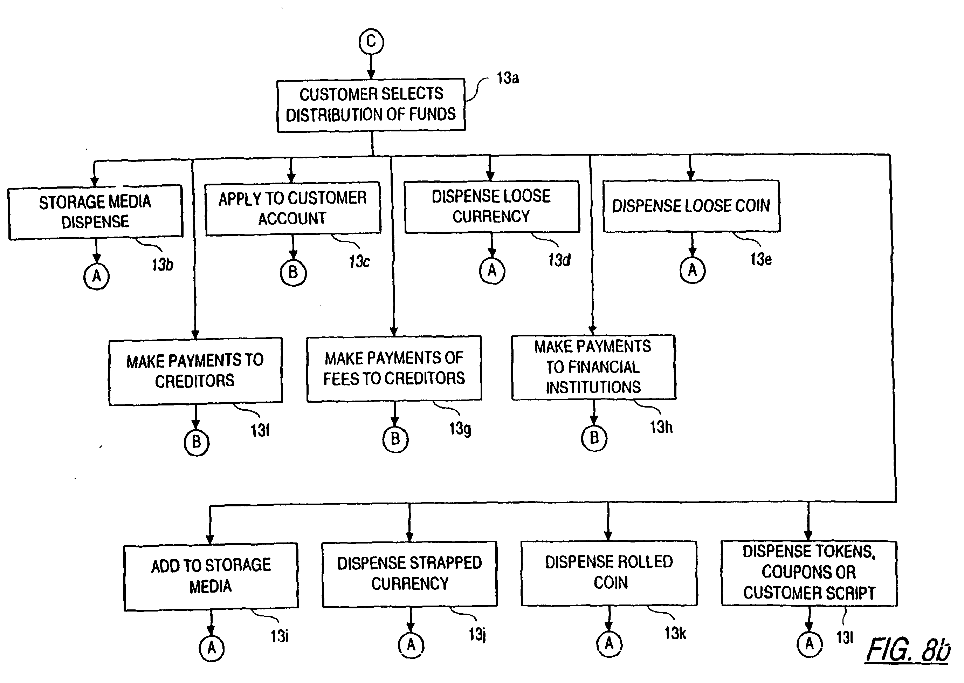

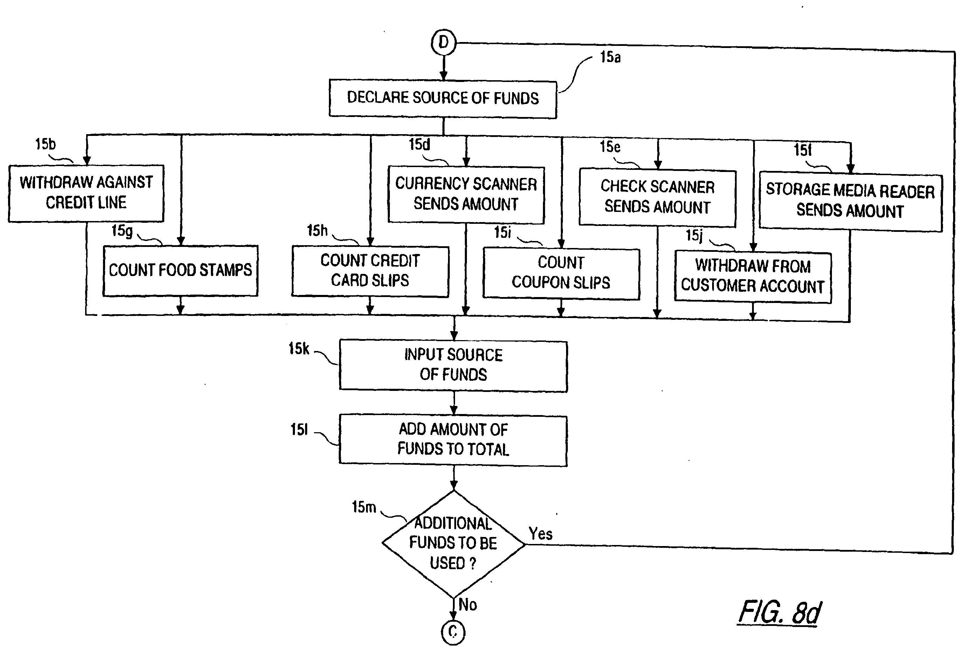

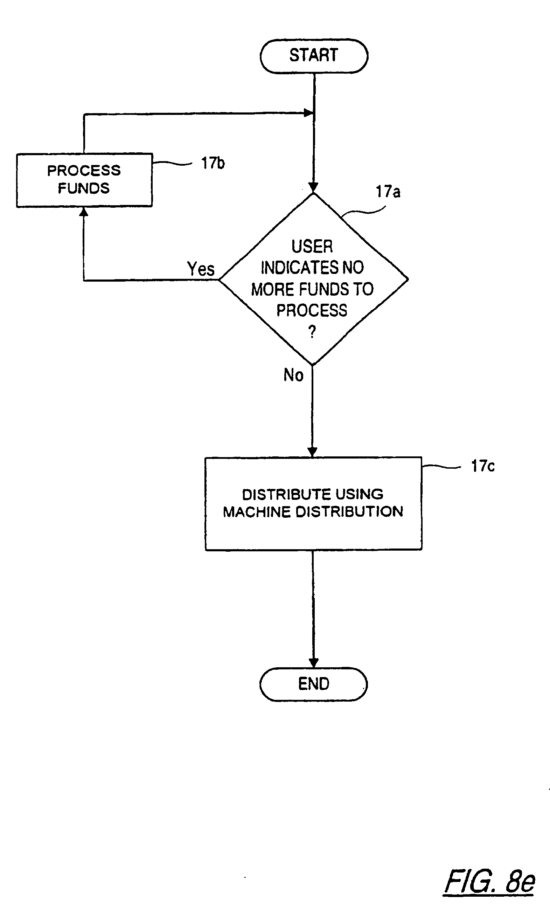

The operation of the distribution step is now described in greater detail. As mentioned previously, at step 10c of flowchart 1a, the user allocates the amount deposited, whether the amount deposited is in the form of bills or coin. This step is illustrated in detail in FIGs. 8b, 8c, and 8d.

The machine inputs the funds at step 15k and sets Sₜₒₜₐₗ (the total funds to be allocated) equal to either Bₜₒₜₐₗ at step 15l. The user has the choice of adding more funds at step 15m. If the answer is affirmative, more funds are added. This process is described in detail below. If the answer is negative, the machine proceeds to step 13a with the user selecting the amount and destination for the distribution of funds. The user is prompted by screen 52 to make these selections.

The user then has several options for distribution destinations. The user can choose to proceed to step 13b where an amount is transferred onto some storage media, for example, a smart card, and the storage media is automatically dispensed to the user. Another option, at step 13c, is to have an amount distributed to a user account, for example, an account in a grocery store. Another choice is to distribute an amount in the form of loose currency to the user at step 13d or loose coin at step 13e. The user can also choose to distribute the amount to creditors at step 13f or make payment of fees to creditors at step 13g. The user might make payment of fees to financial institutions at step 13h. These could include mortgage payments, for example. The user can choose to add the amount to some form of storage media, for example, a smart card, at step 13i. The user might also choose to dispense strapped currency at step 13j, rolled coin at step 13k, or in the form of tokens, coupons, or user script at step 13l.

For some of the distribution selections, e.g. distribution of loose bills, the user may wish to have certain denominations returned to him or may wish to accept a machine allocation. For example, the user may choose to allocate a $100 deposit as four $20 bills, one $10 bill, and two $5 bills rather than accepting the default machine allocation. Those distributions where the user has a choice of allocating the deposit themselves or accepting a machine allocation, follow path A. If the machine proceeds via path A, at step 14a the user is asked whether they wish to allocate the amount. If the answer is affirmative, the user will then decide the allocation at step 14c. However, if the answer at step 14a is negative, then the machine decides the allocation at step 14b. Machine allocation is appropriate for dispensing all forms of bills, coins, tokens, coupons, user script and to storage media.

On the other hand, some distributions, e.g. deposits to bank accounts, require the user to allocate the deposit. For example, for a $500 deposit, a user may allocate $250 to a savings account and $250 to a checking account. Those distributions where the user is required to allocate the amount deposited follow path B. If the machine proceeds via path B, at step 14c the user decides the allocation. The machine then continues at step 14c.

After steps 14c or 14d, the machine proceeds to step 14d where the amount distributed is subtracted from the total amount deposited. At step 14e, the machine determines whether there is anything left to distribute after the subtraction. If the answer is affirmative, the machine proceeds to step 13a where the user again decides a place to distribute the amount allocated.

At step 14f, the user decides whether they wish to close the transaction. If they do, the transaction is closed. The closing completes step 10c of FIG. 1a. On the other hand, they may not wish to end the transaction. For example, they may wish to add more cash, coins, or credit from other sources. If this is the case, the machine proceeds to step 15a of FIG. 8d.

At step 15a, the user decides which additional source of funds is to be used. The user could choose, at step 15b, to withdraw funds from a credit line, for example, from a credit card or bank. The user could choose to deposit more bills at step 15d. These steps were discussed above. The user could also choose to write a check and have this scanned in at step 15e, take a value from a form of storage media, for example, a smart card, at step 15f, add values from food stamps at step 15g, count credit card slips at step 15h or coupon slips at step 15i, or withdraw from a user account at step 15j.

At step 15k, these additional funds are input into the system. For example, the algorithm illustrated in FIG. 8a is used to input an amount of additional funds from newly deposited bills. At step 15l, this amount is added to the total amount of funds. At step 15m, the user is given the choice of adding more funds. If the answer is affirmative, the system returns to step 15a where the user declares the source of additional funds. If the answer is negative, the machine returns to step 13a in FIG. 8b where the user is again asked to determine the distribution of the funds. The machine then proceeds as described above.

The user can initiate a transaction by directly depositing funds from some form of storage media including all forms of magnetic, optical, and solid-state media. In the case of a storage media transaction, the user may insert their media into a media reader so that it may be read. The machine then may prompt the user for the amount to be removed from the media and distributed to other sources. Conversely, the machine might remove all the funds available from the media. In any case, once the deposit amount has been removed from the media, the machine proceeds to step 15k in FIG. 8d. The remaining steps are the same as described above.

Also as described above, the user can initiate a transaction by depositing funds from an outside source. By outside source, it is meant to include a credit card account, bank account, store account, or other similar accounts. The user may initiate a transaction by using the touch screen to enter account information, such as the account number and PIN number to access the account. The user might also initiate the transaction by moving an account identification card through a media reader, then using the communications panel to enter other data such as the amount to be withdrawn from the account. Then, the system proceeds to step 15k of FIG. 8d. The remaining steps are described are the same as described above.

The alternate funds distribution algorithm is illustrated in FIG. 8e. At step 17a, the user indicates whether there are any more funds to process. If the answer is affirmative, at step 17b, the machine processes more funds. If the answer is negative, then at step 17c, the dispensing unit distributes the funds according to its programming. Operation of the machine then stops.

As described above, the processing system has the advantage of being able to process mixed currency or documents utilizing full image scanning and a currency discriminator. The deposits in the system are processed substantially immediately. In addition, the full image of the scanned document can be communicated to a central office from which two-way communication with a system at a remote location is allowed. Finally, the processing system provides all the benefits of an automated teller machine.

## Claims

1. A document processing system comprising:
an input receptacle (16) for receiving documents;
a transport mechanism (18) coupled to said input receptacle (16) for receiving said documents from said input receptacle (16) and transporting said documents past a scanner (12), capable of obtaining images of the full documents, and a discriminating unit (14);
an output receptacle (20) for receiving said documents from said transport mechanism (18) after being transported past said scanner (12) and discrimination unit (14);
said scanner (12) including means for obtaining images of said full documents, means for obtaining and analyzing information contained in a selected area of said documents;
said discrimination unit (14) including means for determining the authenticity of said document;
a system controller (10) coupled to said transport mechanism (18) for directing the flow of documents through said transport mechanism (18); and
an interface (24) for communicating with an outside accounting system, said interface (24) coupled to said system controller (10), said outside accounting system processing said information concerning said documents substantially immediately.

2. The document processing system of claim 1 wherein said output receptacle (20) is a single bin.

3. The document processing system of claim 1 wherein said output receptacle (20) is a plurality of bins.

4. The document processing system of claim 1 further comprising means (26) for communicating operational instructions from said system controller (10) to a user.

5. The document processing system of claim 1, wherein said interface (24) is adapted for sending the images of said full documents to said outside accounting system.

6. The document processing system according to claim 1 to 5 for receiving and dispensing currency, the system substantially immediately furnishing an associated outside accounting system with data, including the value of currency processed in a single transaction, wherein said information represents the value of said currency.

7. The document processing system according to one of claims 1 to 6 for receiving and dispensing currency, the system further comprising:
means for identifying and determining an amount of said documents,
means for allocating and dispensing said amount of the documents, said means distributing at least a part of the amount of documents, dispensing the part of the amount of documents in currency, and allocating the dispensed part of the amount of documents to the amount of the documents,
said interface (24) supplying the amount to an outside accounting system processing and distributing the remaining amount of the documents to an outside account.

8. Method for processing documents comprising the steps of:
receiving documents in an input receptacle (16),
transporting said documents from said input receptacle (16) past a scanner (12), capable of obtaining an image of the full documents and a discrimination unit (14),
receiving said documents in an output receptacle (20) from said transport mechanism (18) after being transported past said scanner (12) and discrimination unit (14);
obtaining and analyzing images of said full documents, and obtaining information contained in a selected area of said documents;
determining the authenticity of said documents;
directing the flow of documents on said transport mechanism (18);
communicating with an outside accounting system; and
the outside accounting system processing said information concerning said documents substantially immediately.

9. The method of claim 8, wherein said communicating comprises sending the images of said full documents to said outside accounting system.

10. The method of claim 8 or 9 wherein said communicating comprises substantially immediately furnishing an associated outside accounting system with data, including the value of currency processed in a single transaction, wherein said information represents the value of said currency.

11. The method according to one of claims 8 to 10 further comprising:
identifying and determining an amount of said documents;
allocating and dispensing said amount of the documents comprising:
distributing at least a part of the amount of documents,
dispensing the part of the amount of documents in currency, and
allocating the dispensed part of the amount of documents to the amount of the documents; and
supplying the amount to an outside accounting system processing and distributing the remaining amount of the documents to an outside account.

12. Use of a document processing system according to claim 6 for processing currency for receiving and dispensing currency and substantially immediately furnishing an associated outside accounting system with data, including the value of the currency processed in a single transaction.

## Patentansprüche

1. Ein Dokumentenverarbeitungssystem umfassend:
eine Eingangsaufnahme (16) zum Aufnehmen von Dokumenten;
einen Transportmechanismus (18), der mit der Eingangsaufnahme (16) verbunden ist, um Dokumente von der Eingangsaufnahme (16) zu erhalten und die Dokumente vorbei an einem Scanner (12), der geeignet ist Bilder von dem vollständigen Dokument zu erhalten, und eine Unterscheidungseinheit (14) zu transportieren;
eine Ausgangsaufnahme (20) zum Aufnehmen der Dokumente von dem Transportmechanismus (18) nachdem sie an dem Scanner (12) und der Unterscheidungseinheit (14) vorbei transportiert sind;
der Scanner (12) umfasst Mittel Bilder des vollständigen Dokuments zu erhalten, und Mittel, die in einem ausgewählten Bereich des Dokuments beinhalteten Informationen zu erlangen und zu analysieren;
die Unterscheidungseinheit (14) umfasst Mittel, die Echtheit des Dokuments zu bestimmen;
eine Systemsteuerung (10), die mit dem Transportmechanismus (18) verbunden ist, um den Fluss der Dokumente durch den Transportmechanismus (18) zu leiten; und
eine Schnittstelle (24), um mit einem außenliegenden Buchhaltungssystem zu kommunizieren, die Schnittstelle (24) ist mit der Systemsteuerung (10) verbunden, das außenliegende Buchhaltungssystem verarbeitet die die Dokumente betreffenden Informationen im Wesentlichen unverzüglich.

2. Das Dokumentenverarbeitungssystem nach Anspruch 1, wobei die Ausgangsaufnahme (20) ein einzelner Behälter ist.

3. Das Dokumentenverarbeitungssystem nach Anspruch 1, wobei die Ausgangsaufnahme (20) eine Vielzahl von Behältern ist.

4. Das Dokumentenverarbeitungssystem nach Anspruch 1, weiter umfassend Mittel (26), um Betriebsanweisungen von der Systemsteuerung (10) an einen Nutzer zu kommunizieren.

5. Das Dokumentenverarbeitungssystem nach Anspruch 1, wobei die Schnittstelle (24) geeignet ist die Bilder der vollständigen Dokumente an das außenliegende Buchhaltungssystem zu senden.

6. Das Dokumentenverarbeitungssystem nach einem der Ansprüche 1 bis 5 zum Aufnehmen und Ausgeben von Geld, das System vorsorgt ein verbundenes außenliegendes Buchhaltungssystem im Wesentlichen unverzüglich mit Daten, einschließlich dem Wert des in einem einzelnen Vorgang verarbeiteten Geldes, wobei die Information den Wert des Geldes darstellt.

7. Das Dokumentenverarbeitungssystem nach einem der Ansprüche 1 bis 6 zum Aufnehmen und Herausgeben von Geld, das System umfasst weiter:
Mittel den Wert von den Dokumenten zu identifizieren und zu bestimmen,
Mittel den Wert der Dokumente bereitzustellen und herauszugeben, die Mittel verteilen zumindest einen Teil des Wertes der Dokumente, herausgeben von einem Teil des Wertes der Dokumente in Geld und verrechnen des herausgegebenen Teils des Wertes der Dokumente mit dem Wert der Dokumente,
die Schnittstelle (24) liefert den Wert an ein außenliegendes Buchhaltungssystem, das den verbleibenden Wert der Dokumente mit einem außenliegenden Konto verarbeitet und zuteilt.

8. Ein Verfahren zum Verarbeiten von Dokumenten, umfassend die Schritte von:
Aufnehmen von Dokumenten in einer Eingangsaufnahme (16),
Transportieren der Dokumente von der Eingangsaufnahme (16) vorbei an einem Scanner (12), der geeignet ist Bilder von dem vollständigen Dokument zu erhalten, und an einer Unterscheidungseinheit (14),
Aufnehmen der Dokumente aus dem Transportmechanismus (18) in einer Ausgangsaufnahme (20) nachdem sie an dem Scanner (12) und der Unterscheidungseinheit (14) vorbei transportiert wurden;
Erhalten und Analysieren der Bilder von den vollständigen Dokumenten, und Erlangen von Informationen, die in einem ausgewählten Bereich der Dokumente enthalten sind;
Bestimmen der Echtheit der Dokumente;
Leiten des Flusses von Dokumenten in dem Transportmechanismus (18);
Kommunizieren mit einem außenliegenden Buchhaltungssystem, wobei das außenliegende Buchhaltungssystem die die Dokumente betreffenden Informationen im Wesentlichen unverzüglich verarbeitet.

9. Das Verfahren nach Anspruch 8, wobei das Kommunizieren das Senden der Bilder der vollständigen Dokumente an das außenliegende Buchhaltungssystem umfasst.

10. Das Verfahren nach Anspruch 8 oder 9, wobei das Kommunizieren das im Wesentlichen unverzügliche Versorgen eines verbundenen außenliegenden Buchhaltungssystem mit Daten umfasst, einschließlich des Wertes des in einem einzelnen Vorgang verarbeiteten Geldes, wobei die Information den Wert des Geldes entspricht.

11. Das Verfahren nach einem der Ansprüche 8 bis 10 weiter umfassend:
Identifizieren und Bestimmen eines Wertes der Dokumente;
Bereitstellen und Herausgeben des Wertes der Dokumente umfassend:
Verteilen zumindest eines Teils des Wertes der Dokumente,
Herausgeben eines Teils des Wertes der Dokumente in Geld, und Verrechnen des herausgegebenen Teils des Wertes der Dokumente mit dem Wert der Dokumente; und
Bereitstellen des Wertes an ein außenliegendes Buchhaltungssystem, das den verbleibenden Wert der Dokumente an ein außenliegendes Konto verarbeitet und zuteilt.

12. Verwenden eines Dokumentenverarbeitungssystems nach Anspruch 6 zum Verarbeiten von Geld, zum Aufnehmen und Herausgeben von Geld und um ein zugeordnetes außenliegendes Buchhaltungssystem im Wesentlich unverzüglich mit Daten zu versorgen, einschließlich des Wertes des in einem einzelnen Vorgangs verarbeiteten Geldes.

## Revendications

1. Système de traitement de documents comprenant :
un réceptacle d'entrée (16) pour la réception des documents ;
un mécanisme de transport (18) couplé audit réceptacle d'entrée (16) pour la réception desdits documents à partir dudit réceptacle d'entrée (16) et pour le transport desdits documents vers un scanner (12) pouvant obtenir des images des documents entiers, et un ensemble discriminateur (14) ;
un réceptacle de sortie (20) pour la réception desdits documents à partir dudit mécanisme de transport (18) après avoir été transportés vers ledit scanner (12) et l'ensemble discriminateur (14) ;
ledit scanner (12) comprenant des moyens pour obtenir des images desdits documents entiers, des moyens pour obtenir et analyser des informations comprises dans une zone choisie desdits documents;
ledit ensemble discriminateur (14) comprenant des moyens pour la détermination de l'authenticité dudit document ;
un contrôleur de système (10) couplé audit mécanisme de transport (18) pour diriger le flux de documents par l'intermédiaire dudit mécanisme de transport (18) ; et
une interface (24) pour la communication avec un système de comptabilité externe, ladite interface (24) couplée audit contrôleur de système (10), ledit système de comptabilité externe traitant lesdites informations concernant lesdits documents essentiellement immédiatement.

2. Système de traitement de documents selon la revendication 1 dans lequel ledit réceptacle de sortie (20) est une simple corbeille.

3. Système de traitement de documents selon la revendication 1 dans lequel ledit réceptacle de sortie (20) est une pluralité de corbeilles.

4. Système de traitement de documents selon la revendication 1 comprenant en outre des moyens (26) pour la communication d'instructions opérationnelles dudit contrôleur de système (10) vers un utilisateur.

5. Système de traitement de documents selon la revendication 1 dans lequel ladite interface (24) est adaptée pour l'envoi des images desdits documents entiers vers ledit système de comptabilité externe.

6. Système de traitement de documents selon les revendications 1 à 5 pour la réception et la distribution de monnaie, le système fournissant essentiellement immédiatement un système associé de comptabilité externe avec des données, comprenant la valeur de la monnaie traitée dans une transaction simple, dans lequel lesdites informations représentent la valeur de ladite monnaie.

7. Système de traitement de documents selon les revendications 1 à 6 pour la réception et la distribution de monnaie, le système comprenant en outre :
des moyens pour l'identification et la détermination d'un montant desdits documents,
des moyens pour l'attribution et la distribution dudit montant de documents, lesdits moyens distribuant au moins une partie du montant de documents, distribuant la partie du montant de documents en monnaie, et attribuant la partie distribuée du montant de documents au montant de documents,
ladite interface (24) fournissant le montant à un système de comptabilité externe traitant et distribuant le montant restant de documents à une comptabilité externe.

8. Procédé pour le traitement de documents comprenant les étapes consistant à :
recevoir les documents dans un réceptacle d'entrée (16),
transporter lesdits documents à partir dudit réceptacle d'entrée (16) vers un scanner (12) pouvant obtenir une image des documents entiers et un ensemble discriminateur (14) ;
recevoir lesdits documents dans un réceptacle de sortie (20) à partir dudit mécanisme de transport (18) après avoir été transportés vers ledit scanner (12) et l'ensemble discriminateur (14) ;
obtenir et analyser des images desdits documents entiers, et obtenir des informations comprises dans une zone choisie desdits documents;
déterminer l'authenticité desdits documents ;
diriger le flux de documents vers ledit mécanisme de transport (18) ;
communiquer avec un système de comptabilité externe ; et
traiter par le système de comptabilité externe lesdites informations concernant lesdits documents essentiellement immédiatement.

9. Procédé selon la revendication 8, dans lequel ladite communication comprend l'envoi des images desdits documents entiers vers ledit système de comptabilité externe.

10. Procédé selon les revendications 8 ou 9, dans lequel ladite communication comprend essentiellement immédiatement la mise à disposition d'un système associé de comptabilité externe avec des données, comprenant la valeur de la monnaie traitée dans une transaction simple, dans lequel lesdites informations représentent la valeur de ladite monnaie.

11. Procédé selon l'une quelconque des revendications 8 à 10 comprenant en outre :
l'identification et la détermination d'un montant desdits documents,
l'attribution et la distribution dudit montant de documents comprenant :
la distribution d'au moins une partie du montant de documents,
la distribution de la partie du montant de documents en monnaie, et
l'attribution de la partie distribuée du montant de documents au montant de documents; et
la fourniture du montant à un système de comptabilité externe traitant et distribuant le montant restant de documents à une comptabilité externe.

12. Utilisation d'un système de traitement d'un document selon la revendication 6 pour le traitement de monnaie pour la réception et la distribution de monnaie et essentiellement immédiatement la mise à disposition d'un système associé de comptabilité externe avec des données, comprenant la valeur de la monnaie traitée dans une transaction simple.
